Europäisches Patentamt

European Patent Office

Office européen des brevets

(11) Veröffentlichungsnummer: **0 450 556 A2**

## (12) EUROPÄISCHE PATENTANMELDUNG

(21) Anmeldenummer: 91105162.1

(22) Anmeldetag: 02.04.91

(51) Int. Cl.⁵: B23Q 7/14

(30) Priorität: 03.04.90 DE 4010698

(43) Veröffentlichungstag der Anmeldung:
09.10.91 Patentblatt 91/41

(84) Benannte Vertragsstaaten:
AT BE CH DE ES FR GB IT LI NL SE

(71) Anmelder: PROTECH AUTOMATION GmbH
Niederkasseler Strasse 14
W-5000 Köln 90(DE)

(72) Erfinder: Blöcker, Detlef, Dipl.-Ing.
Alter Heeresweg 32
W-5330 Königswinter 21(DE)

(74) Vertreter: Selting, Günther, Dipl.-Ing. et al
Patentanwälte von Kreisler, Selting, Werner
Deichmannhaus am Hauptbahnhof
W-5000 Köln 1(DE)

(54) Umsetzstation.

(57) Um Werkstückträger (10) von einem ankommenden Förderer (12) auf einen abgehenden Förderer (13) umzusetzen, ist ein Lift (14) vorgesehen, dessen Träger (19) seitlich neben den beiden Förderern (12,13) angeordnet ist und der mehrere Werkstückträger (10) parallel aufnehmen kann. Von einer Schiebevorrichtung (22) werden die Werkstückträger (10) von dem ankommenden Förderer (12) auf den Träger (19) übergeben. An dem abgehenden Förderer (13) ist eine Ziehvorrichtung (30) vorgesehen, die die Werkstückträger (10) von dem Lift übernimmt und sie gleichzeitig und parallel auf den abgehenden Förderer (13) überträgt.

FIG.1

Die Erfindung betrifft eine Umsetzstation der im Oberbegriff des Patentanspruchs 1 angegebenen Art.

Aus DE-GM 89 03 031 ist eine gattungsgemäße Umsetzstation in einer Montagelinie, die zwei Förderer in unterschiedlichen horizontalen Ebenen aufweist, bekannt. Jeder dieser Förderer befördert Werkstückträger, auf denen Werkstücke angeordnet sind, an denen in der Montagelinie Montage- oder Fertigungsarbeiten durchgeführt werden. Zum Umsetzen der Werkstückträger von einem Förderer auf den in einer anderen Ebene befindlichen anderen Förderer dient ein Lift, der nach Art eines Balkonlifts ausgebildet ist und dessen vertikal bewegbarer Träger in Längsausrichtung zu dem Zuförderer und dem Abförderer angeordnet ist. Der Träger des Lifts hat eine solche Länge, daß er eine Reihe aus mehreren Werkstückträgern, die ggf. einen Abstand zueinander aufweisen, aufnehmen und diese in die andere Ebene umsetzen kann. Der Träger ist zu diesem Zweck mit einer angetriebenen Fördereinrichtung ausgestattet, um die ihm in Längsrichtung zugeführten Werkstückträger von dem Zuförderer aufzunehmen und um diese Werkstückträger nach erfolgter Vertikalbewegung in die andere Ebene an einen Abförderer abzugeben. Der Lift ist dabei als Balkonlift ausgeführt, d.h. er weist ein Hubgestell auf, von dem der vertikal bewegbare Träger nach Art eines Balkons, der nach drei Seiten hin frei ist, absteht. Bei der bekannten Umsetzstation muß der Träger des Lifts zum einen in der Ebene des Zuförderers solange verweilen, bis eine entsprechende Anzahl von Werkstückträgern durch Transport in Richtung des Zuförderers übernommen wurde. Erst dann kann der Träger vertikal in die Ebene des Abförderers bewegt werden. Zum anderen erreichen aber im allgemeinen die Werkstückträger den Lift nicht in einer geschlossenen Reihe, so daß der Träger des Lifts die Vertikalbewegung nicht mit seiner vollen Kapazität durchführt. Schließlich benötigt die Vorrichtung eine aufwendige Erfassung ankommender Werkstückträger sowie eine komplizierte Steuerung (z.B. damit sich jeweils eine ganzzahlige Anzahl von Werkstückträgern auf dem Träger befindet, sich ein Werkzeugträger also nicht teilweise auf dem Zuförderer und teilweise auf dem Träger befindet).

Der Erfindung liegt die Aufgabe zugrunde, eine Umsetzstation der im Oberbegriff des Patentanspruchs 1 angegebenen Art zu schaffen, die das Umsetzen von Werkstückträgern von einem Zuförderer auf einen Abförderer mit höherer Effizienz und einem geringeren Steuerungsaufwand durchführen kann.

Die Lösung dieser Aufgabe erfolgt bei einer gattungsgemäßen Umsetzstation mit den im kennzeichnenden Teil des Patentanspruchs 1 angegebenen Merkmalen.

Der Träger ist nicht in Längsausrichtung mit dem Zu- oder Abförderer angeordnet sondern seitlich davon. Die Werkstückträger treffen normalerweise auf dem Zuförderer nicht in dichter Folge ein sondern mit gegenseitigen Abständen, die auch variieren können. Um eine vollständige Kapazitätsauslastung des Trägers des Lifts sicherzustellen, ist an dem Zuförderer stromabwärts eine Aufstauvorrichtung in Form eines Endanschlags vorgesehen, gegen den jeweils der erste eintreffende Werkstückträger stößt. Die nachfolgenden Werkstückträger stoßen jeweils auf den angehaltenen vorhergehenden Werkstückträger, während der Zuförderer unter ihnen weiterläuft. Auf diese Weise entsteht ein Stau von Werkstückträgern, die in dichter Folge angeordnet sind. Nachdem dieser Stau die Anzahl n von Werkstückträgern erreicht hat, welche von dem Träger des Lifts übernommen werden können, wird die Übergabevorrichtung in Betrieb gesetzt und die n Werkstückträger werden mit der Übergabevorrichtung gleichzeitig seitlich vom Zuförderer auf den Träger des Lifts übertragen. Von dem Zuförderer werden also durch eine Übergabevorrichtung mehrere aufgestaute Werkstückträger gleichzeitig parallel zueinander durch seitliches kurzes Verschieben auf den Träger des Lifts umgesetzt, so daß die Werkstückübergabe an den Lift sehr schnell und in geschlossener Reihe erfolgt. In gleicher Weise werden die Werkstückträger von dem Lift auf den Abförderer von einer anderen Übergabevorrichtung durch seitliches kurzes Verschieben gleichzeitig parallel und in geschlossener Reihe übertragen. Für einen Zyklus des Liftbetriebes steht somit eine Zeit zur Verfügung, die n-mal so groß ist wie der Zeitabstand, in dem die Werkstückträger auf dem ankommenden Förderer eintreffen, ohne daß hierdurch irgendeine Verzögerung durch den Lift eintreten würde. n ist hierbei die Anzahl der Werkstückträger, die gleichzeitig vom Träger des Lifts aufgenommen werden können.

Wenn die Übergabevorrichtung während der seitlichen Übergabe der Werkstückträger und während der Rückwärtsbewegung den Transportweg des Zuförderers überragt, müssen weitere ankommende Werkstückträger solange aufgehalten werden, bis die Übergabevorrichtung wieder ihre Bereitschaftsstellung erreicht hat. Dies geschieht zweckmäßigerweise mit einem Anschlag, der an der Übergabevorrichtung vorhanden ist.

Vorteilhafterweise sind die beiden Übergabevorrichtungen auf der dem Träger abgewandten Seite der beiden Förderer angeordnet. Hierbei kann die eine Übergabevorrichtung eine Schiebevorrichtung und die andere Übergabevorrichtung eine Ziehvorrichtung aufweisen. Während die Schiebevorrichtung einen einfachen Schieber aufweist, welcher die Werkstückträger verschiebt, muß die Ziehvorrichtung die Werkstücke übergreifen.

Im folgenden wird unter Bezugnahme auf die Zeichnungen ein Ausführungsbeispiel der Erfindung näher erläutert.

Es zeigen:

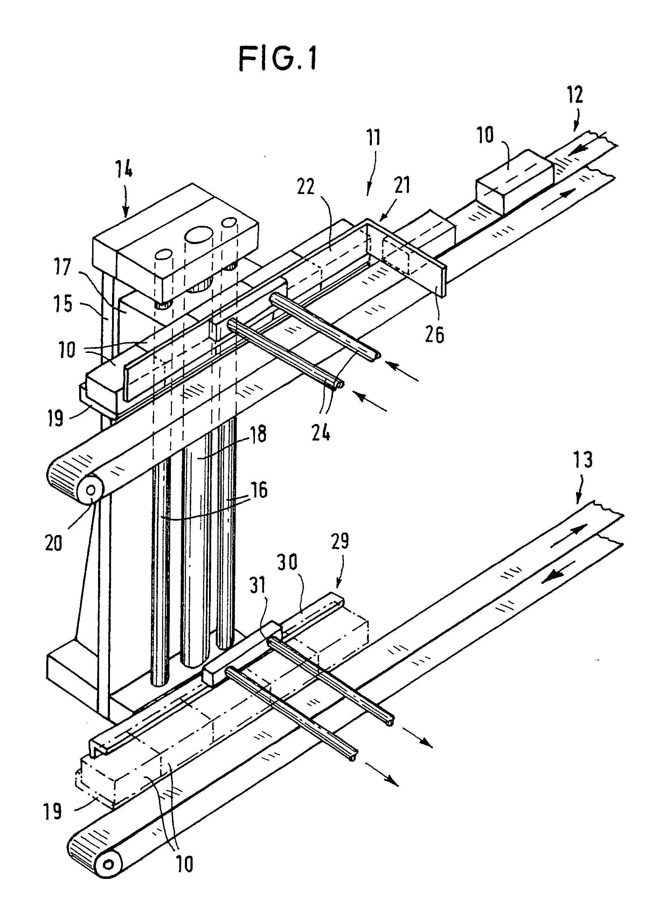

Fig. 1    eine schematische perspektivische Darstellung des Grundaufbaus einer in der Montagelinie enthaltenen Umsetzstation zum Umsetzen von Werkstückträgern von einem Zuförderer auf einen Abförderer,

Fig. 2    eine Stirnansicht der Umsetzstation, teilweise geschnitten, und

Fig. 3    eine Draufsicht von Fig. 2.

Eine Montagelinie, die im übrigen nicht vollständig dargestellt ist, dient zur Durchführung von Bearbeitungs- und Montagevorgängen an Werkstücken. Diese Werkstücke sind auf Werkstückträgern 10 oder Paletten angeordnet. Die Werkstückträger sind hier aus Gründen der Einfachheit nur als rechteckige Platten oder Kästen dargestellt. Sie können Werkstückaufnahmen oder Befestigungsvorrichtungen aufweisen, in denen die Werkstücke in definierter Form gehalten werden.

Die Umsetzstation 11 dient zum Umsetzen von Werkstückträgern 10 von einem Zuförderer 12 auf einen Abförderer 13. Die Förderer sind Bandförderer, die hier jeweils aus einem einzigen endlosen Förderband bestehen. Die Werkstückträger liegen auf dem Obertrum dieses Förderbandes auf. Die beiden Förderer sind in unterschiedlichen Horizontalebenen lotrecht übereinander angeordnet. Die Umsetzstation 11 dient dazu, Werkstückträger zusammen mit ihren Werkstücken von einer Fertigungsebene in eine andere Fertigungsebene zu bringen, oder auch um leere Werkstückträger, aus denen die Werkstücke zuvor entnommen worden sind, auf eine Rückführungsebene umzusetzen. Es ist auch nicht unbedingt erforderlich, daß der Abförderer 13 in dieselbe Richtung fördert, aus der der Zuförderer 12 fördert. Wichtig ist nur, daß beide Förderer in einer gemeinsamen vertikalen Ebene angeordnet sind und sich in vertikaler Projektion mindestens teilweise überlappen.

Die Umsetzstation 11 weist einen Lift 14 mit einem Grundgestell 15 und säulenartigen vertikalen Führungen 16 auf. Längs der Führungen 16 ist ein Schlitten 17 geführt, der von einer Antriebssäule 18 angetrieben wird. Die Antriebssäule 18 enthält beispielsweise eine Kolbenzylindereinheit, eine Spindel oder eine ähnliche Antriebseinrichtung für den Schlitten 17.

Der Schlitten 17 trägt in Balkonbauweise den Träger 19, der in Längsrichtung der Förderer eine solche Länge hat, daß mehrere Werkstückträger 10 auf ihm Platz haben. Die Anzahl der vom Träger 10 in geschlossener Reihe aufzunehmenden Werkstückträger 19 beträgt mindestens zwei und bei dem vorliegenden Ausführungsbeispiel fünf.

Der Zuförderer 12 überragt den seitlich von ihm angeordneten Träger 19 des Lifts 14 in Transportrichtung (stromab). Sein Förderband läuft dort um eine Umlenkrolle 20. Auf der dem Träger 19 abgewandten Seite des Zuförderers 12 befindet sich die Übergabevorrichtung 21, die eine leistenförmige Schiebevorrichtung 22, einen Antrieb 23 und Schiebestangen 24 aufweist. Der Antrieb 23, der über Druckluftleitungen 25 versorgt wird, bewegt die Schiebevorrichtung 22 quer über den Zuförderer 12. Die Schiebevorrichtung 22 greift dabei an allen für die Übergabe vorgesehenen Werkstückträgern 10 gleichzeitig an und überträgt diese von dem Zuförderer 12 auf den Träger 19. Die Länge der Schiebevorrichtung 22 ist etwa gleich wie die Länge des Trägers 19. Am stromauf gerichteten Ende der Schiebevorrichtung 22 befindet sich ein Anschlag 26, der bei vorgeschobener Schiebevorrichtung 22 den Transportweg des Zuförderers 12 versperrt und ankommende Werkstückträger 10 aufhält, so daß diese sich vor dem Anschlag 26 stauen, wobei das Förderband des kontinuierlich bewegten Zuförderers 12 unter ihnen durchrutscht.

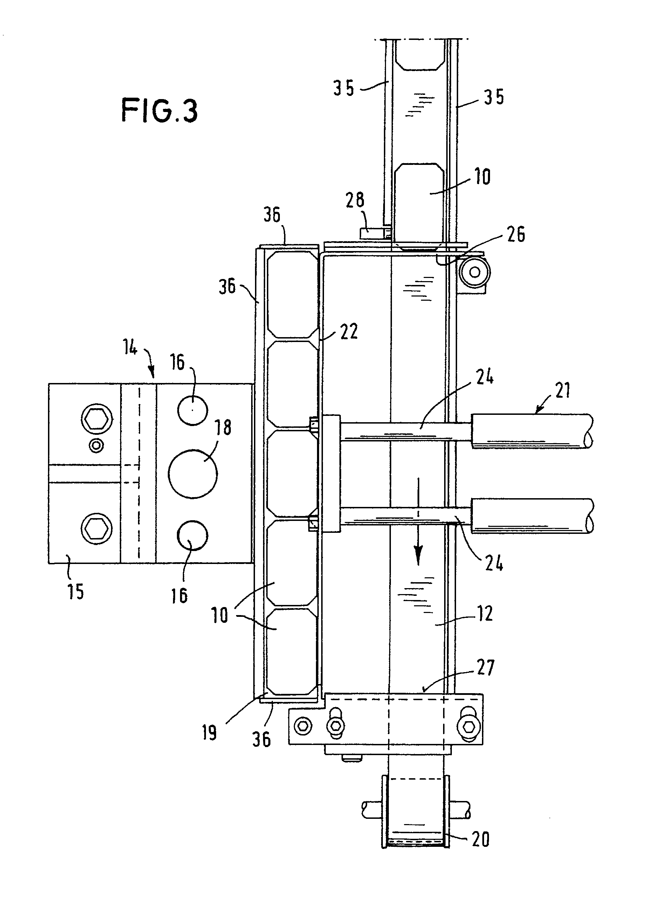

Gemäß Fig. 3 ist quer über dem Zuförderer 12 ein Endanschlag 27 angeordnet, gegen den die Werkstückträger 10 auflaufen. Der Endanschlag 27 befindet sich an einer Stelle, die dem stromab gerichteten Ende des Trägers 19 entspricht. Wenn auf den dem Endanschlag 27 vorgeordneten Teil des Zuförderers 12 n Werkstückträger 10 aufgelaufen sind, wird dies von einem Sensor 28 erkannt, der daraufhin den Antrieb 23 zum Vorschieben der Schiebevorrichtung 22 betätigt. Der Sensor 28 ist außerhalb des Bereichs der Schiebevorrichtung 22 an einer Stelle angeordnet, die von den Werkstückträgern passiert wird, bevor diese in den Übergabebereich des Zuförderers 12 eintreten. Der Sensor 28 zählt das Passieren von n Werkstückträgern und betätigt dann die Schiebevorrichtung 22.

An dem Abförderer 13 ist auf der dem Träger 19 gegenüberliegenden Seite eine weitere Übergabevorrichtung 29 angeordnet, die eine leistenförmige Ziehvorrichtung 30 aufweist. Die Ziehvorrichtung 30 hat ebenfalls eine solche Länge, daß sie n Werkstückträger 10, die sich auf dem in der unteren Endstellung befindlichen Träger 19 befinden, gleichzeitig erfassen kann. Der Antrieb für die Ziehvorrichtung 30 weist horizontal bewegbare Balken 31 auf, die von einer Kolbenzylindereinheit 32 bewegt werden. An den Enden der Balken 31 befindet sich eine Kolbenzylindereinheit 33 mit vertikal bewegbaren Balken 34, an denen die Ziehvorrichtung 30 befestigt ist. Durch Ausfahren der Balken 31 wird die Ziehvorrichtung 30 über die auf dem Träger 19 befindlichen Werkstückträger 10 hinwegbewegt. Danach werden die Balken 34 ausgefahren, so daß die Ziehvorrichtung 30 die Werkstückträger 10 hintergreift. Werden anschließend die Balken 31 eingefahren, dann werden die Werkstückträger 10 von dem Träger 19 des Lifts auf den kontinuierlich laufenden Abförderer 13 übertragen, der sie dann abfördert.

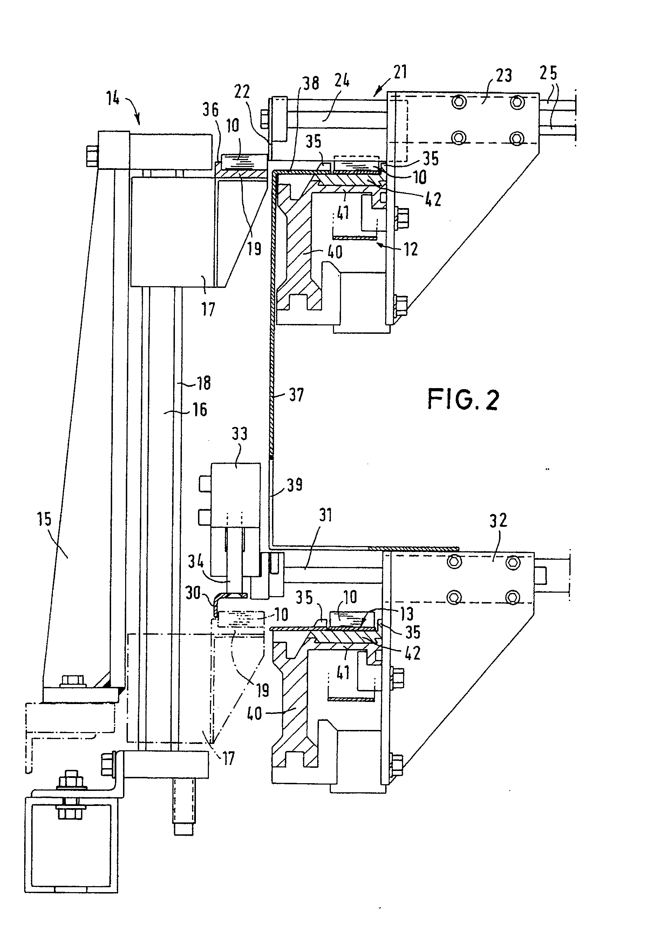

Um sicherzustellen, daß die Werkstückträger an der Umsetzstation nicht von den sie tragenden Förderbändern oder dem Träger 19 herabfallen, sind an den Förderern Seitenbegrenzungen 35 vorgesehen, die jeweils über den Obertrum des Förderbandes aufragen und Seitenführungen für die Werkstückträger 10 bilden. Diese Seitenführungen sind nur an der Umsetzstation, also an der Stelle, die von der Schiebevorrichtung 22 und von der Ziehvorrichtung 30 passiert wird, an einer Seite offen. Der Träger 19 des Balkonlifts weist an drei Seiten Seitenbegrenzungen 36 auf, und er ist an der den Förderern zugewandten Seite offen, d.h. nicht mit einer Seitenbegrenzung versehen. Diese offene Seite bewegt sich bei der Vertikalbewegung des Trägers 19 an einer vertikalen Wand 37 (Fig. 2) entlang, die während des Liftbetriebes eine Begrenzung für die auf dem Träger 19 befindlichen Werkstückträger 10 bildet. Die Wand 37 geht an ihrem oberen Ende in eine Platte 38 über, die eine Schiebefläche für die Werkstückträger bildet und an einem Ende an den Obertrum des Förderbandes des Zuförderers 12 und am anderen Ende an den in der oberen Endstellung befindlichen Träger 19 angrenzt. Die Wand 37 hat im unteren Bereich eine Öffnung 39 für den Durchtritt der Kolbenzylindereinheit 33.

Jeder der Förderer weist ein durchgehendes Trägerprofil 40 auf, mit einem seitlich auskragenden Arm 41, auf dem ein aus Kunststoff bestehendes Gleitprofil 42 sitzt. Dieses Gleitprofil bildet eine Unterlage für den Obertrum des Förderbandes. Die Seitenbegrenzungen 35 sind dem Gleitprofil 42 einstückig angeformt.

Die Umsetzstation arbeitet wie folgt:
Die Werkstückträger 10 werden auf dem Zuförderer 12 in unregelmäßiger Folge mit beliebigen Abständen angefördert. Sie laufen dabei gegen den Endanschlag 27 (Fig. 3) und stauen sich an diesem auf, während das Förderband unter ihnen hindurchläuft. Sobald der Sensor 28 festgestellt hat, daß eine entsprechende Anzahl n von Werkstückträgern durchgelaufen ist, wird der Antrieb 21 betätigt und die Schiebevorrichtung 22 übergibt die n Werkstückträger 10 parallel und gleichzeitig auf den angehobenen Träger 19. Der auf dem Zuförderer 12 nächstfolgende Werkstückträger wird von dem Anschlag 26 der Schiebevorrichtung 22 zurückgehalten. Sobald die Schiebevorrichtung 22 die Werkstückträger auf den Träger 19 übergeben hat, fährt der Träger 19 auf die Ebene des unteren Abförderers 13 herunter. Die Werkstückträger werden von dort durch die Ziehvorrichtung 30 auf den unteren Abförderer 13 gezogen. Der Träger 19 wird dann wieder aufwärtsbewegt, um die nächste Gruppe von Werkstückträgern zu übernehmen.

**Patentansprüche**

1. Umsetzstation in einer Montagelinie mit einer Werkstückträger (10) transportierenden Fördereinrichtung, welche zwei in unterschiedlichen horizontalen Ebenen angeordnete Förderer umfaßt, und einem Lift (14) mit einem vertikal bewegbaren Träger (19), mit dem mehrere Werkstückträger (10) von einem Zuförderer (12) auf einen Abförderer (13) umsetzbar sind, **dadurch gekennzeichnet,** daß sich der Zuförderer (12) und der Abförderer (13) in vertikaler Projektion in Längsrichtung mindestens teilweise überlappen, daß der Träger (19) des Lifts (14) seitlich neben den Förderern angeordnet ist und in Längsrichtung der Förderer eine solche Länge hat, daß er mehrere mittels einer Aufstauvorrichtung in geschlossener Reihe angeordnete Werkstückträger (10) gleichzeitig aufnehmen kann, und daß Übergabevorrichtungen (11,29) vorgesehen sind, mit denen so viele Werkstückträger (10) wie der Träger (19) in geschlossener Reihe aufnehmen kann, gleichzeitig und parallel von dem Zuförderer (12) auf den Träger (19) und nach dessen Vertikalbewegung von dem Träger (19) auf den Abförderer (13) übergebbar sind.

2. Umsetzstation nach Anspruch 1, dadurch gekennzeichnet, daß an dem Zuförderer (12) am stromabwärtigen Ende des Trägers (19) als Aufstauvorrichtung ein Endanschlag (27) vorgesehen ist, der die Werkstückträger parallel zu dem Träger (19) staut.

3. Umsetzstation nach Anspruch 1 oder 2, dadurch gekennzeichnet, daß an dem Zuförderer (12) als Übergabevorrichtung (11) eine quer zum Förderer bewegbare Schiebevorrichtung (22) vorgesehen ist, die mehrere Werkstückträger (10) gleichzeitig bewegt, und daß der Antrieb (23) für die Schiebevorrichtung (22) auf der dem Träger (19) abgewandten Seite des Zuförderers (12) angeordnet ist.

4. Umsetzstation nach Anspruch 3, dadurch gekennzeichnet, daß die Schiebevorrichtung (22) an ihrem stromaufwärtigen Ende einen Anschlag (26) trägt, der bei über den Zuförderer (12) geschobener Schiebevorrichtung die ankommenden Werkstückträger staut.

5. Umsetzstation nach einem der Ansprüche 1 bis 4, dadurch gekennzeichnet, daß an dem Abförderer (13) als Übergabevorrichtung (29) eine quer zu dem Förderer bewegbare Ziehvorrichtung (30) vorgesehen ist, die mehrere Werkstückträger gleichzeitig auf den Abförderer (13) zieht, und daß der Antrieb für die Ziehvorrichtung (30) auf der dem Träger (19) abgewandten Seite des Abförderers (13) angeordnet ist.

6. Umsetzstation nach Anspruch 5, dadurch gekennzeichnet, daß der Antrieb für die Ziehvorrichtung (30) einen horizontal bewegbaren Balken (31) und einen daran befestigten senkrecht bewegbaren Balken (34), an dem die Ziehvorrichtung (30) befestigt ist, aufweist.

7. Umsetzstation nach einem der Ansprüche 1 bis 6, dadurch gekennzeichnet, daß der Träger (19) des Lifts (14) drei Seitenbegrenzungen (36) aufweist und nur an der den Förderern zugewandten Seite offen ist und daß zwischen den Förderern eine senkrechte Wand (37) verläuft, an der sich der Träger (19) bei seiner Vertikalbewegung im geringen Abstand entlangbewegt und die dabei das Herabfallen von Werkstückträgern (10) verhindert.

8. Umsetzstation nach einem der Ansprüche 1 bis 7, dadurch gekennzeichnet, daß die Förderer aufragende Seitenbegrenzungen (35) aufweisen, die im Bereich der Übergabevorrichtungen (11,29) zum Träger (19) hin fehlen.

9. Umsetzstation nach einem der Ansprüche 1 bis 8, dadurch gekennzeichnet, daß der Lift (24) ein Balkonlift ist, bei dem der Träger (19) nur an seiner vom Förderer abgewandten Seite mit einem entlang einer Vertikalführung verschiebbaren Schlitten (17) verbunden ist und von diesem Schlitten frei auskragt.

10. Umsetzstation nach einem der Ansprüche 1 bis 9, dadurch gekennzeichnet, daß an dem Zuförderer (12) ein Sensor (28) angeordnet ist, der die passierenden Werkstückträger (10) zählt und die Übergabevorrichtung (21) aktiviert, wenn er von einer vorbestimmten Anzahl von Werkstückträgern passiert wurde.

# FIG.1

EP 0 450 556 A2

FIG. 2

# FIG.3